## Europäisches Patentamt

## European Patent Office

## Office européen des brevets

(11) Veröffentlichungsnummer: **0 033 332**
**B1**

(12) **EUROPÄISCHE PATENTSCHRIFT**

(45) Veröffentlichungstag der Patentschrift:
**12.10.83**

(51) Int. Cl.³: **G 01 J 1/42**, G 08 G 1/10

(21) Anmeldenummer: **80901552.2**

(22) Anmeldetag: **06.08.80**

(86) Internationale Anmeldenummer:
**PCT/EP 80/00071**

(87) Internationale Veröffentlichungsnummer:
**WO 81/00454 (19.02.81 Gazette 81/5)**

(54) **VERFAHREN ZUR ANALYSE DER SICHTVERHÄLTNISSE IN EINER VERKEHRSSZENE.**

(30) Priorität: **07.08.79 DE 2931992**

(43) Veröffentlichungstag der Anmeldung:
**12.08.81 Patentblatt 81/32**

(45) Bekanntmachung des Hinweises auf die Patenterteilung:
**12.10.83 Patentblatt 83/41**

(84) Benannte Vertragsstaaten:
**FR**

(56) Entgegenhaltungen:
**US-A-3 258 528**
**US-A-3 788 201**
**IEEE Transactions on Vehicular Technology, Band VT-19, no. 3, August 1970, New York US, J. Bruder: «Instrumentation for mapping light intensity contours»**
**SPIE, Proceedings of Seminar on Patent Recognition Studies, 9-10 June 1969, New York US, publisher in 1969, Redondo Beach (US) Z. Tashjian et al.: «Photographic techniques for the study of traffic flow», see pages 103-111**
**IBM Technical Disclosure Bulletin, vol. 18, no. 1, published on June 1975, New York (US), M. Bush et al.: «Display of stored images», pages 272-273**

(73) Patentinhaber: **LUEG, Fred, Hülsstrasse 97, D-4370 Marl (DE)**
Patentinhaber: **Schulze, Curtis, Josefstrasse 116, D-4352 Herten (DE)**

(72) Erfinder: **LUEG, Fred, Hülsstrasse 97, D-4370 Marl (DE)**
Erfinder: **Schulze, Curtis, Josefstrasse 116, D-4352 Herten (DE)**

(74) Vertreter: **Spalthoff, Adolf, Dipl.-Ing., Pelmanstrasse 31 P.O. Box 34 02 20, D-4300 Essen 1 (DE)**

## Verfahren zur Analyse der Sichtverhältnisse in einer Verkehrsszene

In der Verkehrsgerichtsbarkeit ist es bekannt, zur Erstellung von Gutachten die Leuchtdichteverteilung einer bestimmten Verkehrsszene, in der sich ein Unfall ereignet hat, Punkt für Punkt mit einer Rasterung von ca. 500 Bildpunkten und einem Zeitaufwand von ca. 4 Stunden mit einem Spezialmessgerät zu erfassen. Diese Messungen werden Punkt für Punkt mit einem nochmaligen Zeitaufwand von ca. 8 Tagen ausgewertet, um eine Aussage über die Helligkeitsverteilung sowie Helligkeitsunterschiede benachbarter Punkte treffen zu können. Von diesen Ergebnissen wird die Fähigkeit des Menschen abgeleitet, bei einer bestimmten Leuchtdichteverteilung eine ganz bestimmte Situation erkennen zu können. Dieser Art der Auswertung einer Leuchtdichteverteilung erweist sich wegen der erforderlichen Bearbeitungszeiten als vergleichsweise aufwendig, ganz abgesehen davon, dass die Rasterung ziemlich grob ist, so dass zwischen diesen Lücken entstehen können. Weiterhin kann diese bekannte Auswertung nur von hochqualifizierten Kräften vorgenommen werden, die eine ganz spezielle Ausbildung erfahren müssen.

Durch das Sonderheft «Leitz» Mitteilungen für Wissenschaft und Technik, betreffend das Instrument «Leitz-Classimat», ist ein Verfahren sowie ein Instrument zur Ausmessung von Flächenverhältnissen und zur Zählung von Partikeln bekannt. Das Gerät besteht aus einer optischen Einheit, z.B. einem Mikroskop oder einer Makro-Einrichtung, einem speziell für quantitative Untersuchungen geeigneten Fernseh-Analyse-System und einer logischen Datenverknüpfungseinheit. Das zur Messung ausgewählte Bild wird auf einem Monitor dargestellt. Zur Erzeugung eines Bildsignals dient eine Fernsehaufnahmeröhre. Das Bildsignal wird elektronisch derart umgesetzt, dass eine Darstellung der Helligkeitsverteilung der Vorlage in Form eines weisse, schwarze und graue Bereiche enthaltenden Fernsehbildes gewonnen wird.

Durch den Prospekt Nr. 521-54 der Firma Ernst Leitz GmbH, Wetzlar, betreffend ein «Farb-Display», vom Juni 1976 ist es weiterhin bekannt, die durch Graustufen wiedergegebene Helligkeitsverteilung mit Hilfe verschiedener Farben darzustellen.

Der Erfindung liegt die Aufgabe zugrunde, ein Verfahren zur Analyse der Sichtverhältnisse in einer Verkehrsszene zu schaffen, welches in einfacher und schneller Weise mit vergleichsweise geringem Bearbeitungsaufwand und hoher Genauigkeit auch dem Laien eine Analyse der Sichtverhältnisse einer Verkehrsszene ermöglicht, und zwar in einer auf die Gegebenheiten des Auges Rücksicht nehmenden Abstufung der Farbwerte.

Gemäss der Erfindung wird dies dadurch erreicht, dass

a) ein entsprechend der räumlichen Helligkeitsverteilung der Verkehrsszene moduliertes elektrisches Signal erzeugt wird, und

b) aus dem elektrischen Signal eine bildliche Darstellung der Helligkeitsverteilung gewonnen wird, in der unterschiedliche Helligkeitsbereiche nach Massgabe der Helligkeitsempfindlichkeit des Auges jeweils mit unterschiedlichen Farben wiedergegeben werden.

Es ist z.B. eine parallele Arbeitsweise möglich, bei der die Vorlage in mehrere hundert Bildpunkte gerastert und jeder Punkt gleichzeitig verarbeitet und angezeigt wird. Der Vorteil dieses Verfahrens besteht darin, dass die zur Durchführung erforderliche Vorrichtung sehr klein und betriebssicher ist und infolgedessen leicht transportiert werden kann, sowie eine helle Anzeige liefert. Diese Ausführung ergibt jedoch nur eine vergleichsweise grobe Rasterung.

Weiterhin kann eine serielle Arbeitsweise durchgeführt werden, mit dem Vorteil, handelsübliche Videokameras und umgebaute Farbfernsehgeräte zu verwenden, die mit einer Schnittstelle versehen sind, an die ein elektronischer Rechner angeschlossen ist. Diese Arbeitsweise ergibt eine hohe Auflösung von mehreren hunderttausend Messpunkten, erfordert jedoch einen vergleichsweise hohen Stromverbrauch, so dass eine derartige Anlage nur bedingt transportabel ist. Der Rechner ist so auszulegen, dass dieser mehrere millionen Operationen pro Sekunde verarbeiten kann.

Es kann an Ort und Stelle auch nur mit einer Videokamera gearbeitet werden und deren aufgezeichnete Bilder als Vorlage für die weitere Erfassung dienen.

Sowohl die parallele als auch die serielle Arbeitsweise lassen beim ausgewerteten Bild (Farbspektrum) die Konturen der Szene erkennen. Es können auch bewegte Bilder ausgewertet werden.

Die Erfindung ist an Hand eines Beispiels zur Auswertung eines Schwarz-Weiss-Bildes nachstehend erläutert.

Das als Schwarz-Weiss-Bild dienende Vorlage wird über eine Videokamera auf dem Schirm eines Farbfernsehgerätes abgebildet. Nunmehr erfolgt ein Helligkeits- und Kontrastabgleich. Über den an eine Schnittstelle des Farbfernsehgerätes angeschlossenen Rechner wird eine Umschaltung auf eine erste Position vorgenommen, so dass das Helligkeitsspektrum des aufgenommenen Bildes angezeigt wird, dessen Farben ein Mass für die Leuchtstärke sind.

Bevorzugt werden folgende Einteilungen vorgenommen:

Roter Bereich: die Leuchtstärke liegt unter der Empfindlichkeitsschwelle des Auges,

Grüner Bereich: die Leuchtstärke liegt im Empfindlichkeitsbereich des Auges,

Blauer Bereich: das Auge ist geblendet.

Da das Auge mit Hilfe der Pupille in der Lage ist, sich an unterschiedliche Helligkeitsverhältnisse anzupassen, wird der Rechner in Position 2 umgeschaltet, in welcher die Reaktion des Auges simuliert und entsprechend das Farbspektrum veränder wird. Daraufhin erfolgt eine Umschaltung in Position 3 des Rechners, in welchem die nichterkennbaren Bildteile ausgeblendet werden. Stellung 4 gibt eine Kontrastverteilung des Bildes wieder. Die 4 Schaltstellungen bewirken eine Programmänderung und Änderung der Parameter in der an der Schnittstelle liegenden elektronischen Datenverarbeitung.

Es lassen sich leicht Farbfotos von diesen vier Auswertungsstufen herstellen, die nicht von labortechnischen Einflüssen abhängig sind, da die Grenzen durch Farbsprünge in den drei Grundfarben realisiert werden, wobei die Farbintensität nur noch von untergeordneter Bedeutung ist.

Für die Erstellung von Gutachten können als Beweismittel vier Farbbilder vorgelegt werden, die

1. die absolute Lichtverteilung,

2. die relative Lichtverteilung unter Berücksichtigung des Regelverhaltens des Auges,

3. den Bereich, der vom Auge überhaupt erkennbar ist, wiedergegeben, und

4. die Kontrastverteilung der Szene bzw. Vorlage als Farbsprünge bezogen auf die Helligkeitsunterschiede zwischen Umfeld und Objekt.

Die Auswertung dauert nur einige Minuten, wobei die Interpretation der Aufnahmen von einem mit den zugrundeliegenden Problemen vertrauten Laien ohne weiteres durchgeführt werden kann.

Die durchgeführte elektronische Auswertung führt zu einer ganz erheblichen Erhöhung der Genauigkeit, da mehr als hunderttausend Punkte gemessen und ausgewertet werden. Durch diese extrem feine Rasterung werden Lücken vermieden.

Zur Durchführung der Auswertung eignet sich besonders ein fotografischer Apparat, z.B. eine Videokamera, die an einen als Anzeigegerät verwendeten Farbfernsehapparat angeschlossen ist, in dem eine Schnittstelle für den Anschluss des elektronischen Rechners vorgesehen ist. Da es sich hierbei in erster Linie um eine stationäre Ausführung handelt, kann die Videokamera auch benutzt werden, um an Ort und Stelle beispielsweise die bei einem Verkehrsunfall herrschenden Lichtverhältnisse aufzunehmen, woraufhin die Auswertung des Magnetbandes über das Farbfernsehgerät mit dem daran angeschlossenen Rechner erfolgt.

Ein Ausführungsbeispiel der Erfindung ist an Hand des beigefügten Blockschaltbildes erläutert.

Mit 1 ist die Vorlage, beispielsweise ein Schwarz-Weiss-Bild, bezeichnet, das über das optische System 2 eines fotografischen Apparates erfasst wird. Das vom optischen System 2 erstellte Bild wird über den Wandler 3 in elektrische Spannungen umgewandelt, die in den Rechner 4 eingegeben werden, der eine dreifarbige Anzeige auf den Bildschirm des Farbfernsehgerätes 5 liefert.

Unter optischem System sind alle Abbildungsverfahren zu verstehen, die mit von den abzubildenden Gegenständen ausgehender reflektierter, hindurchgelassener oder gebeugter elektromagnetischer oder Korpuskularstrahlung und entsprechend strahlungsempfindlichen Auffangschichten zum Zweck der Informationsübertragung, z.B. zum Festhalten von Abbildern aber auch von Beugungsfiguren, Kernspuren und ähnlichen arbeiten. Als fotografische Apparate können alle optischen Geräte zur Aufnahme fotografischer Bilder Verwendung finden, im weiteren Sinne auch Geräte zur Vergrösserung und Projektion, sowie Film- und Videokameras.

Das erfindungsgemässe Verfahren lässt sich nicht nur zur Leuchtdichteverteilung bei bestimmten Situationen im Verkehr verwenden, sondern ganz allgemein überall dort, wo es um die Erfassbarkeit des menschlichen Auges geht, z.B. auch bei Unfällen am Arbeitsplatz, bei denen die Frage der Ausleuchtung für die Ursächlichkeit des Unfalls eine Rolle spielt, oder aber auch bei Erkrankungen der Augen und so weiter. In allen diesen Fällen lässt sich in einfacher und schneller Weise eine objektive Messung und Auswertung durchführen, so dass im nachhinein genau festgestellt werden kann, welche Situation zu einem früheren Zeitpunkt vom Betrachter erfasst werden konnte.

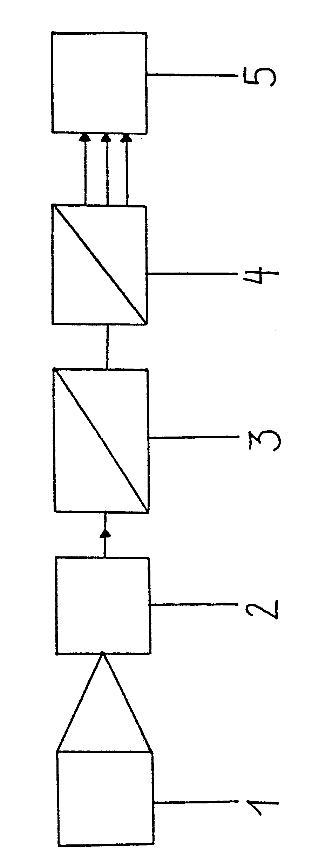

**Patentansprüche:**

1. Verfahren zur Analyse der Sichtverhältnisse in einer Verkehrsszene, dadurch gekennzeichnet, dass

a) ein entsprechend der räumlichen Helligkeitsverteilung der Verkehrsszene moduliertes elektrisches Signal erzeugt wird, und

b) aus dem elektrischen Signal eine bildliche Darstellung der Helligkeitsverteilung gewonnen wird, in der unterschiedliche Helligkeitsbereiche nach Massgabe der Helligkeitsempfindlichkeit des Auges jeweils mit unterschiedlichen Farben wiedergegeben werden.

2. Verfahren nach Anspruch 1, dadurch gekennzeichnet, dass das elektrische Signal mit einer Videokamera (2) erzeugt wird, dass die Helligkeitsverteilung aus diesem Signal mit Hilfe eines Rechners (4) ermittelt wird, und dass die ermittelte Helligkeitsverteilung auf einem Farbgernsehgerät (5) dargestellt wird, das über eine Schnittstelle mit dem Rechner gekoppelt ist.

3. Verfahren nach Anspruch 1 oder 2, dadurch gekennzeichnet, dass zunächst eine fotografische Vorlage (1) der Verkehrsszene erstellt und dass die Helligkeitsverteilung dieser Vorlage ermittelt wird.

**Revendications**

1. Procédé pour l'analyse des conditions de visibilité régnant au cours d'une scène du trafic routier, caractérisé par le fait que:

a) on forme un signal électrique modulé conformément à la répartition spatiale de la luminosité régnant au moment où s'est produite la scène de la circulation, et

b) à partir de ce signal électrique, on obtient une représentation figurative de la répartition de la luminosité dans laquelle on reproduit différentes zones de luminosité, à chaque fois avec des couleurs différentes, en fonction de la sensibilité de l'œil à cette luminosité.

2. Procédé selon la revendication 1, caractérisé par le fait que l'on forme le signal électrique avec une caméra vidéo (2), qu'à partir de ce signal on détermine la répartition de la luminosité à l'aide d'un calculateur (4), et qu'on représente la répartition ainsi déterminée de la luminosité sur un téléviseur couleur (5) qui est accouplé au calculateur par un point de jonction.

3. Procédé selon l'une des revendications 1 ou 2, caractérisé par le fait qu'on établit tout d'abord un document photographique (1) de la scène du trafic routier et que l'on détermine la répartition de la luminosité de ce document.

**Claims:**

1. Method for analysing the visibility conditions in a traffic scene, characterized in that:

(a) an electric signal which is modulated in response to the spatial brightness distribution of the traffic scene is generated, and that

(b) from said signal an image of the brightness distribution is derived in which image regions of different brightness in accordance with the sensation of brightness of the eye are reproduced in different colours.

2. Method according to claim 1, characterized in that the signal is generated by means of a video camera (2), that the brightness distribution is derived from this signal by means of a computer (4), and that the obtained brightness distribution is displayed on a colour television set (5) which is connected to the computer via an interface.

3. Method according to claim 1 or 2, characterized in that at first a photographic image (1) of the traffic scene is produced, and that the brightness distribution of this image is determined.